# EUROPÄISCHE PATENTANMELDUNG

(11) **EP 1 130 821 A2**
(43) Veröffentlichungstag der Anmeldung: **05.09.2001**
(21) Anmeldenummer: 00128432.2
(22) Anmeldetag: 22.12.2000
(51) Int. Cl.: H04B 10/17

(54) **Rauscharmer bidirektionaler optischer Verstärker**

(30) Priorität: 02.02.2000 DE 10004435
(71) Anmelder: SIEMENS AKTIENGESELLSCHAFT, 80333 München (DE)
(72) Erfinder: Krummrich, Peter, Dr., 81379 München (DE)

(57) **Zusammenfassung**

Die vorliegende Erfindung betrifft einen rauscharmen bidirektionalen optischen Verstärker, der in einer bidirektionalen Ubertragungsfaser so angeordnet ist, daß mittels zweier Zirkulatoren die bidirektionale Übertragungsfaser in zwei unidirektionale Zweige aufgeteilt wird. Die unidirektionalen Zweige sind mit mindestens zwei Verstärkern bestückt, zwischen denen bevorzugt mindestens ein optisches Filterelement und bevorzugt mindestens ein Isolator angeordnet ist. Außerdem wird die aktive Faser des ersten Verstärkers der unidirektionalen Zweige bevorzugt über einen WDM-Koppler gepumpt, der nach der aktiven Faser angeordnet ist.

## Beschreibung

Die Erfindung betrifft einen rauscharmen optischen Verstärker für bidirektionale Übertragungsstrecken in einem optischen-Wellenlängen-Multiplex-System (WDM).

Bei der Übertragung von WDM Signalen in einer einzigen Glasfaser kann die Faser in bidirektionaler oder in unidirektionaler Richtung zur Übertragung der Signale genutzt werden. Die bidirektionale Übertragung bietet gegenüber der Übertragung in unidirektionaler Richtung eine Reihe von Vorteile: Die Übertragungsstrecke benötigt nur eine Faser für die Hinund Rückrichtung; außerdem lassen sich nicht lineare Effekte bei geschickter Anordnung der Kanäle oder Bänder reduzieren.

Glasfasern eignen sich aufgrund ihrer hervorragenden Dämpfungseigenschaften zur Übertragung von Signalen über lange Distanzen. Trotz dieser guten Dämpfungseigenschaften bedürfen Signale nach einer gewissen Distanz einer Regeneration durch einen optischen Verstärker. Derzeit eingesetzte Glasfasersysteme arbeiten mit einer Dämpfung der Streckenabschnitte von typischerweise 20 bis 30 dB. Man benötigt deshalb einen optischen Verstärker, der einen Gewinn von mindestens 30 dB bereitstellen kann.

Herkömmliche optische Verstärker können bidirektional übertragene Kanäle nur bis zu einem Gewinn von ca. 20 dB in einer einzigen optischen Faser verarbeiten. Bei höheren Gewinnen führen Mehrfachreflexionen zu nicht tolerierbaren Verzerrungen der Signale.

Eine optische Verstärkung der Signale von mindestens 30 dB kann aber durch Aufteilung der Faser eines bidirektionalen Streckenabschnittes in zwei unidirektionale Zweige erreicht werden. Die Verstärkung der Signale erfolgt dann jeweils in den unidirektionalen Zweigen. Nach der Verstärkung der Signale werden die unidirektionalen Zweige wieder zu einer Faser mit bidirektionaler Übertragung zusammengefügt.

In der US-Patentschrift 5 280 383 ist eine Verstärkeranordnung für eine Faser beschrieben, bei der ein optisches Filterelement und ein Isolator zwischen zwei Verstärkern angeordnet sind. Der erste Verstärker hat die Aufgabe das ankommende Signal vorzuverstärken, während der zweite Verstärker die Endverstärkung übernimmt.

Ein Nachteil dieser Anordnung besteht in der Abschwächung der bereits schwachen Signale vor der ersten Verstärkerstufe, denn durch die Einfügedämpfung des optischen Filterelements wird das zu verstärkende Signalspektrum gedämpft und damit das Rauschverhalten der Gesamtanordnung verschlechtert.

Aufgabe der vorliegenden Erfindung ist es daher, eine Anordnung zur Verfügung zu stellen, die eine leistungsstarke, rauscharme Verstärkung bidirektionaler optischer Signale erlaubt.

Diese Aufgabe wird durch einen bidirektionalen Verstärker nach dem unabhängigen Anspruch gelöst. Vorteilhafte Weiterbildungen werden in den Unteransprüchen definiert.

Insbesondere wird die Aufgabe durch einen bidirektionalen optischen Verstärker 1 für ein optisches Wellenlängen-Multiplex-Übertragungssystem (WDM) gelöst, der aus einem bidirektionalen Streckenabschnitt 30 und zwei Zirkulatoren 31, 32 besteht, die den bidirektionalen Streckenabschnitt 30 in zwei unidirektionale Zweige 10, 20 aufteilen, wobei die unidirektionalen Zweige 10, 20 einen ersten optischen Verstärker 11, 21 und einen zweiten optischen Verstärker 12, 22 und jeweils ein Filter 15, 25 aufweisen und das optische Filter 15, 25 zwischen dem ersten optischen Verstärker 11, 21 und dem zweiten optischen Verstärker 12, 22 angeordnet ist.

Der bidirektionale Streckenabschnitt ist zweckmäßig eine optische Faser. Dabei versteht man unter einem bidirektionalen Streckenabschnitt eine optische Faser, die von Signalen in Hin- und Rückrichtung durchlaufen werden soll, während man unter einem unidirektionalen Zweig eine optische Faser versteht, die nur in eine Richtung, entweder in Hin- oder Rückrichtung von Signalen vollständig durchlaufen wird. Als weitere zweckmäßige Ausführung eignen sich Zirkulatoren 31, 32, die Mehrfachreflexionen unterdrücken können.

Die oben beschriebene Anordnung optischer Elemente in den unidirektionalen Zweigen 10, 20 haben darüber hinaus den Vorteil, daß sie Ringreflexionen vermeiden. Das optische Bandpaßfilter 15, 25 unterdrücken Ringreflexionen, denn es ist so angeordnet, daß das Signalspektrum, das das optische Filterelement passieren kann, sich in den beiden Filterelementen nicht überschneidet. Zudem hat die Anordnung den Vorteil, daß in einem unidirektionalen Zweig 10, 20 das Bandpaßfilter 15, 25 hinter einem ersten Verstärker 11, 21 angeordnet ist, so daß ein bereits schwaches Signal erst durch den Verstärker 11, 21 verstärkt wird, bevor es durch die Einfügedämpfung des Bandpaßfilters 15, 25 wieder geschwächt wird.

Bei einem weitere vorteilhaften Ausbildungsbeispiel ist ein Verstärker vorgesehen, bei dem in dem unidirektionalen Zweig 10, 20 mindestens ein Isolator 19, 29 angeordnet ist. Der Isolator 19, 29 ist vorteilhaft zur Unterdrückung der spontanen Emission (ASE). Eine besonders vorteilhafte Anordnung ist darin zu sehen, daß der Isolator 19, 29 direkt vor dem zweiten Verstärker 12, 22 angeordnet ist. Der Isolator 19, 29 kann dadurch die von nachfolgenden Verstärkern erzeugte ASE am wirksamsten von dem ersten optischen Verstärker 11, 21 fernhalten.

Eine besonders vorteilhafte Ausführungsform eines ersten Verstärkers 11, 21 für den unidirektionalen Zweig 10, 20 umfaßt mindestens ein aktives Faserstück 111, mindestens eine Pumpquelle 112 und mindestens einen WDM-Koppler 113 wobei der WDM-Koppler 113 hinter dem aktiven Faserstück 111 angeordnet ist. Als Pumpquelle wird hier üblicherweise eine Laserdiode (Ausgangssignal bei 980 nm) verwendet. Es kann aber auch jede andere Laserdiode verwendet werden. Vorteilhaft an dieser Ausgestaltung ist das Fehlen optischer Elemente zwischen dem Zirkulator 31 und der die Verstärkung herbeiführende aktive Faser 111. Das Fehlen optischer Elemente in diesem Teil des unidirektionalen Zweiges 10, 20 hat den Vorteil, daß ein ankommendes, schwaches optisches Signal nicht durch die Einfügedämpfung eines optischen Elementes weiter geschwächt wird. Das einzige optische Element, das die Schwächung des ankommenden, schwachen Signals bewirkt, ist der Zirkulator 31. Durch diese Anordnung ist die erste Verstärkerstufe 11, 21 des unidirektionalen Zweiges 10, 20 besonders rauscharm.

Besonders bevorzugt wird als aktives Faserstück 111, das durch eine Pumpquelle 112 gepumpt wird, ein Erbium-dotiertes Faserstück verwendet. Das Erbium-dotierte Faserstück ist besonders wirksam, weil es hohe Verstärkungsraten und hohe Ausgangsleistung hervorbringt und darüber hinaus nahezu rauschfrei arbeitet. Als pumpbare Faserstücke können aber ebenso andere laseraktive ionendotierte Faserabschnitte verwendet werden

Vorteilhafte Ausgestaltungen der Erfindung werden in den weiteren Unteransprüchen erläutert.

Vorteilhafte Ausgestaltungen und Weiterbildungen der vorliegenden Erfindung werden in den Zeichnungen erläutert.

Es zeigen:
- Figur 1: ein Blockschaltbild eines Ausführungsbeispiels eines erfindungsgemäßen bidirektionalen optischen Verstärkers mit einem Bandpaßfilter;
- Figur 2: ein Blockschaltbild eines weiteren Ausführungsbeispiels eines erfindungsgemäßen bidirektionalen optischen Verstärkers mit einem Kammfilter;
- Figur 3: ein Blockschaltbild eines Ausschnitts aus einem erfindungsgemäßen Verstärker;
- Figur 4: ein Blockschaltbild eines Ausschnitts aus einem weiteren erfindungsgemäßen Verstärker; und
- Figur 5: ein Blockschaltbild eines weiteren Ausführungsbeispiels einer bidirektionalen Verstärkeranordnung

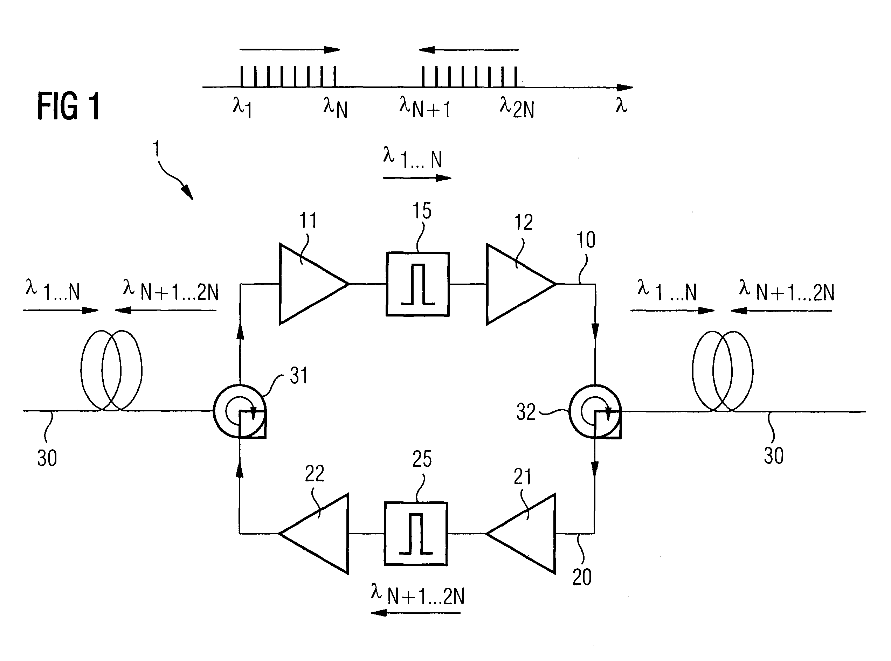

In **Figur 1** ist ein Blockschaltbild eines Ausführungsbeispiels eines erfindungsgemäßen bidirektionalen optischen Verstärkers 1 dargestellt. Im bidirektionalen Streckenabschnitt 30 werden Kanäle bzw. Bänder in Hinrichtung (λ1 - λN) und Rückrichtung (λN+1 - λ2N) übertragen. Durch die Zirkulatoren 31, 32 wird der bidirektionale Streckenabschnitt in zwei unidirektionale Zweige 10, 20 aufgeteilt und wieder zusammengefügt. Im unidirektionalen Zweig 10 sind ein erster optischer Verstärker 11, ein zweiter optischer Verstärker 12 und dazwischen ein Bandpaßfilter 15 angeordnet. Analog ist die Anordnung der optischen Elemente 21, 22, 25 im unidirektionalen Zweig 20.

In Figur 1 ist eine bidirektionale Übertragung von WDM-Signalen mit benachbarten, sich gegenseitig nicht überlappenden Wellenlängenbändern dargestellt. Die Zirkulatoren 31, 32 leiten das Signalspektrum (λ1 - λ2N) des bidirektionalen Streckenabschnitts 30 in die unidirektionalen Zweige 10, 20 ein.

Die Zirkulatoren 31, 32 leiten nicht nur das gesamte ankommende Signalspektrum in die unidirektionalen Zweige 10, 20, sondern unterdrücken zudem zugleich die Mehrfachreflexionen, da sie wie Isolatoren an den Ein- und Ausgängen von Verstärkern wirken. Das ankommende bidirektionale WDM-Signal wird durch den Zirkulator 31 auf den unidirektionalen Zweig 10 geleitet. Das WDM-Signal (λ1 - λ2N) tritt in den ersten Verstärker 11 ein, wird dort verstärkt und durchläuft den optischen Bandpaßfilter 15, wobei das optische Bandpaßfilter 15 nur diejenigen Spektralanteile passieren läßt, die durch den zweiten optischen Verstärker 12 verstärkt werden sollen. In Figur 1 soll das optische Bandpaßfilter 15 nur die Spektralanteile der Hinrichtung des bidirektionalen Signals (λ1 - λN) passieren lassen, während die Spektralanteile der Rückrichtung des bidirektionalen Signals (λN+1 - λ2N) nicht passieren können. Der zweite optische Verstärker 12 liefert die erwünschte Vollverstärkung des Spektralanteils (λ1 - λN), der das optische Bandpaßfilter 15 passiert hat. Der Zirkulator 32 fügt den verstärkten Spektralbereich (λ1 - λN) wieder in den bidirektionalen Streckenabschnitt 30 ein. Analog verhält es sich mit dem Spektralanteil der Rückrichtung des bidirektionalen Signals (λN+1 - λ2N), der durch den unidirektionalen Zweig 20 des bidirektionalen optischen Verstärkers 1 verstärkt werden.

Das optische Bandpaßfilter 15, 25 hat zudem die Aufgabe entstehende Ringreflexionen zu unterdrücken. Das Bandpaßfilter 15 des unidirektionalen Zweiges 10 weist bevorzugt keine Überlappung mit dem Durchlaßbereich des Bandpaßfilters 25 des unidirektionalen Zweiges 20 auf. Bestünde eine Überlappung des Durchlaßbereichs beider Bandpaßfilter 15, 25, so wäre es beispielsweise denkbar, daß Signale der Wellenlänge λ1, die sich innerhalb des Überlappungsbereichs beider Bandpaßfilter 15, 25 befinden, die Kreisanordnung des bidirektionalen optischen Verstärkers ohne Verlust durchlaufen würden.

Der erste Verstärker 11, 21 des unidirektionalen Zweiges 10, 20 hat die Aufgabe das jeweilige Signal nur gering zu verstärken. Durch die Anordnung des ersten Verstärkers 11, 21 vor dem optischen Bandpaßfilter 15, 25 gelangen auch eigentlich nicht zu verstärkende Spektrallinien in den Verstärker 11, 21, wodurch der erste Verstärker 11, 21 schneller seine Sättigungsgrenze erreicht würde. Deshalb erfolgt am ersten Verstärker nur eine geringe Verstärkung, üblicherweise im Bereich von 10 dB. Besonders bevorzugt wird das Signal durch den ersten optischen Verstärker 11, 21 im linearen Bereich des Verstärkers verstärkt. Ein geringer Gewinn am ersten optischen Verstärker 11, 21 hat zusätzlich den Vorteil, daß dadurch nur eine geringe spontanen Emission (ASE) erzeugt wird, die wiederum nicht zu einer Überschreitung der Sättigungsgrenze im ersten optischen Verstärker 11, 21 führt.

Die Anordnung eines optischen Filterelements 15, 25 nach einem ersten optischen Verstärker 11, 21 und vor einem zweiten optischen Verstärker 12, 22 hat gegenüber den bisherigen Anordnungen eines bidirektionalen optischen Verstärkers 1 den Vorteil, daß die Einfügedämpfung des Bandpaßfilters 15, 25 das jeweilige ankommende Signal nicht beeinträchtigt, da das Signal zuvor verstärkt wurde. Dieser Vorteil äußert sich dadurch, daß der erfindungsgemäße bidirektionale optische Verstärker 1 das WDM-Signal rauscharm verstärkt.

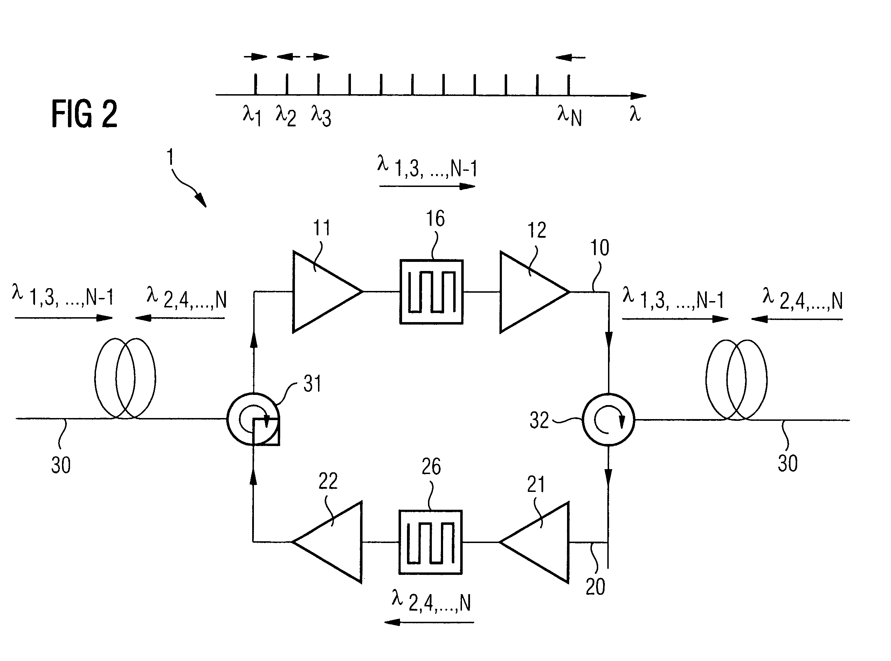

Analog zu Figur 1 ist in **Figur 2** statt eines Bandpaßfilter 15, 25 beispielhaft ein Kammfilter 16, 26 zwischen die Verstärkerstufen eingebaut. Die Verstärkung des optischen WDM-Signals erfolgt in gleicher Weise wie in Figur 1. Dem bidirektionalen optischen Verstärker 1 wird durch den Einbau eines Kammfilter 16, 26 aber die Verstärkung eines alternierenden WDM-Signals ermöglicht. Das WDM-Signal des bidirektionalen Streckenabschnitts 30 wird in einen Anteil in Hinrichtung (λ1, λ3, ..., λ2N-1) und einen Anteil in Rückrichtung (λ2, λ4, ..., λ2N) durch die Zirkulatoren 31, 32 und das Kammfilter 16, 26 aufgeteilt.

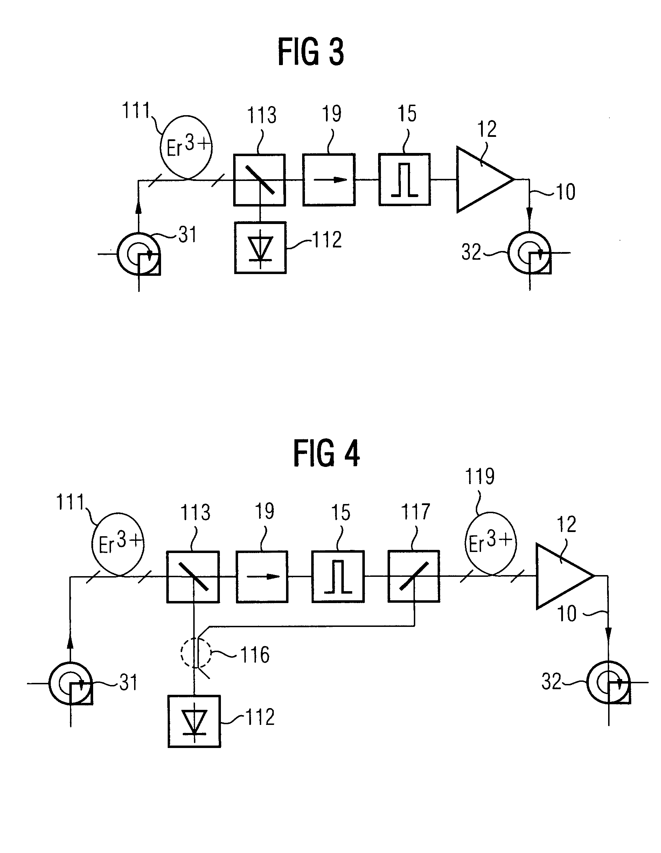

In **Figur 3** ist beispielhaft der unidirektionale Zweig 10 eines bidirektionalen optischen Verstärkers 1 dargestellt. Dabei ist zwischen den zwei Zirkulatoren 31, 32 ein,Erbiumdotiertes Faserstück 111, ein WDM-Koppler 113, der mit einer Pumpquelle 112 verbunden ist, ein Isolator 19, ein Bandpaßfilter 15 und ein zweiter optischer Verstärker 12 angeordnet.

Das durch den Zirkulator 31 ankommende WDM-Signal wird direkt in das Erbium-dotierte Faserstück 111 geleitet, das von der Pumpquelle 112 kontradiktional über den WDM-Koppler 113 gepumpt wird. Das verstärkte WDM-Signal passiert dann einen Isolator 19 und ein Bandpaßfilter 15, das aus dem ankommenden WDM-Signal nur die gewünschten Spektrallinien filtert, bevor das Signal durch den zweiten Verstärker 12 die gewünschte Verstärkung erfährt und durch den Zirkulator 32 wieder in den bidirektionalen Streckenabschnitt 30 eingespeist wird.

Der so angeordnete erste optische Verstärker 11 mit von hinten gepumpten Erbium-dotierten Faserstück 111 hat den Vorteil, daß vor dem aktiven Faserstück 111 kein optisches Element vorhanden ist und somit das ankommende WDM-Signal außer der Einfügedämpfung durch den Zirkulator 31 vor der Verstärkung keine weitere Dämpfung durch ein optisches Element erfährt. Die optischen Elemente, die durch ihre Einfügedämpfung das Rauschverhalten der ersten Verstärkerstufe verschlechtern würden (WDM-Koppler 113 und Bandpaßfilter 15) sind hinter dem aktiven Faserstück 111 angeordnet und dämpfen das WDM-Signal erst nach der Verstärkung. Diese Dämpfung hat aber keine negative Auswirkung auf das verstärkte Signal, da die Einfügedämpfung geringer ist, als die zuvor erfolgte Verstärkung durch den ersten optischen Verstärker 11 beeinträchtigt. Information geht dadurch nicht verloren.

Das Erbium-dotierte Faserstück 111 bzw. der Pumplaser 112 wird so gewählt, daß durch die Verstärkerstufe das ankommende WDM-Signal um ca. 12 dB verstärkt wird. Aufgrund dieses geringen Gewinns wird die Sättigungsschwelle des Verstärkers 12 nicht erreicht. Da das Bandpaßfilter 15 erst hinter dem aktiven Faserstück 111 angeordnet ist, gelangen auch solche Kanäle in das aktive Faserstück 111, die nicht verstärkt werden sollen. Durch die geringe Verstärkung befindet sich die Summe aller Pegel der Kanäle, also auch derjenigen, die eigentlich nicht verstärkt werden sollen, unter der Sättigungsgrenze des aktiven Faserstücks 111. Das verstärkte Signal wird deshalb nicht verzerrt.

Der Isolator 19 hat die Aufgabe die spontane Emission (ASE), die durch die nachfolgenden Verstärkerstufen (speziell Verstärker 12) hervorgerufen werden und die sich in Gegenrichtung zu den zu verstärkenden Signalen ausbreiten, von dem ersten Verstärker 11 fernzuhalten. Ein Eindringen dieser ASE in das aktive Faserstück 111 könnte zur Sättigung des aktiven Faserstücks 111 führen und das Rauschverhalten des gesamten optischen Verstärkers beeinträchtigen.

In **Figur 4** ist ein Aufbau analog zur Figur 3 dargestellt. Allerdings versorgt die Pumpquelle 112 zwei aktive Erbium-dotierte Faserstücke 111, 119. Das zweite aktive Faserstück 119 ist über einen zweiten WDM-Koppler 117 in den unidirektionalen Zweig 10 hinter einem Isolator 19 und einem Bandpaßfilter 15 angeordnet. Hinter dem zweiten aktiven Faserstück 119 ist ein zweiter optischer Verstärker 12 angeordnet.

Das ankommende WDM-Signal, analog zu Figur 3, wird durch das erste Erbium-dotierte Faserstück 111, das über eine Pumpquelle 112 und einen WDM-Koppler 113 kontradiktional gepumpt wird, verstärkt, passiert einen Isolator 19 und ein Bandpaßfilter 15 um dann über einen zweiten WDM-Koppler 117 erneut in einem zweiten Erbium-dotierten Faserstück 119 verstärkt zu werden. Auch dieses Faserstück wird durch die Pumpquelle 112 kontradiktional gepumpt. Das Pumpen des zweiten Faserstücks 119 durch die Pumpquelle 112 erfolgt über einen Leistungsteiler 116. Das zweite Faserstück 119 wird über den WDM-Koppler 117 von vorn gepumpt. Das zweite Faserstück 119 kann auch kontradirektional gepumpt werden, da die Eingangspegel des Signals an dem zweiten aktiven Faserstück 119 deutlich über den Eingangspegel des zu verarbeitenden Signals des ersten Faserstücks 111 liegen.

Das erste optische Faserstück 111 benötigt für sein Verstärkung nur eine geringe Leistung von ca. 40 - 50 mW. Eine Pumpquelle 112, die eine solche geringe Leistung zur Verfügung stellt ist kommerziell kaum verfügbar. Die vorgeschlagene Anordnung hat den Vorteil, daß mit einer Pumpquelle 112 über einen Leistungsteiler 116 zwei optisch aktive Faserstükke 111, 119 gepumpt werden können und daß zugleich die benötigte geringe Leistung des ersten Faserstücks 111 zur Verfügung gestellt werden kann.

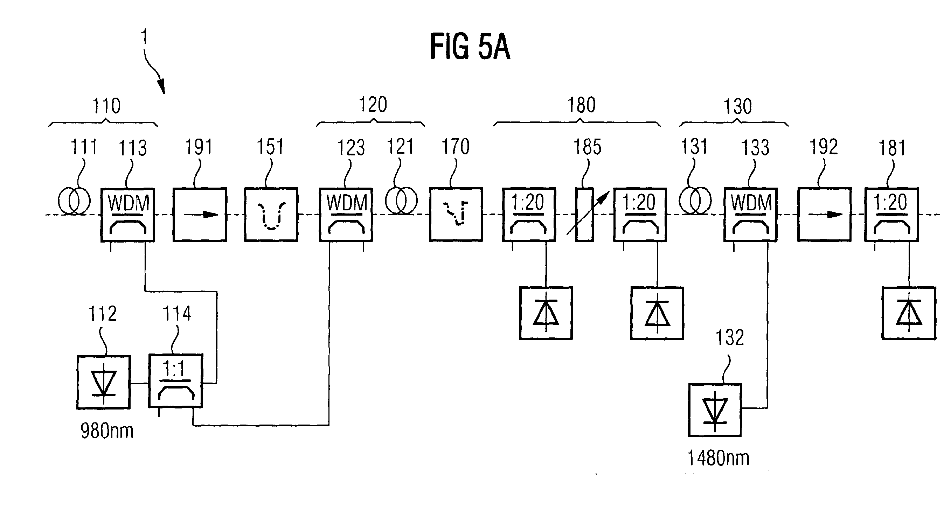

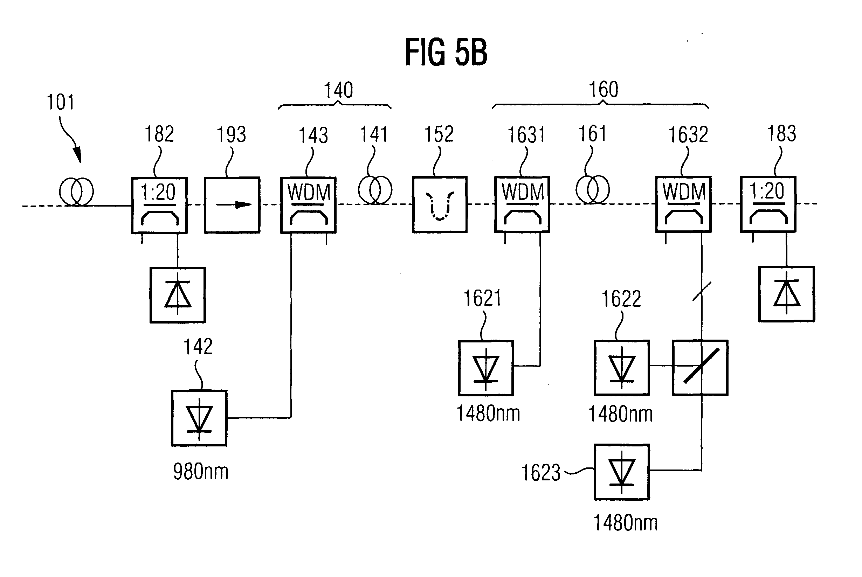

In **Figur 5** ist eine besonderes vorteilhafte Ausführungsform eines erfindungsgemäßen Verstärkers dargestellt. Figur 5 stellt eine Anordnung von optischen Elementen eines unidirektionalen Zweiges 10, 20 zwischen den beiden Zirkulatoren 31, 32 eines bidirektionalen Streckenabschnitts 30 dar. Die Anordnung enthält 5 Verstärker 110 - 140, 160, die alle ein Erbium-dotiertes Faserstück 111 - 141, 161 enthalten. Bei 4 Verstärkern 110 - 140 ist ein WDM-Koppler 113 - 143 vorgesehen, nur der Verstärker 161 weist zwei WDM-Koppler 1631, 1632 auf. Der ersten beiden Verstärker 110, 120 werden von einer Pumpquelle 112 im 980 nm Bereich über einen Leistungsteiler 116 versorgt. Der Verstärker 130 wird über einen Pumplaser 132 im 1480 nm Bereich versorgt, während der Verstärker 140 durch einen Pumplaser 142 im 980 nm Bereich gepumpt wird. Der Verstärker 160 wird hingegen über 3 Laser 1621 - 1623 im 1480 nm Bereich kontradiktional gepumpt, wobei die Pumpquellen 1621 - 1623 einmal vor dem optisch aktiven Faserstück 161 und das andere Mal hinter dem optisch aktiven Faserstück 161 angeordnet sind. Die Laser 1622 und 1623 können bevorzugt multigeplext betrieben werden.

Zwischen dem ersten Verstärker 110 und dem zweiten Verstärker 120 ist ein Isolator 191 und ein Bandpaßfilter 151 angebracht. Dem zweiten Verstärker 120 folgt ein gain-flattening-Filter 170, das wiederum von einer Tab-Koppler Anordnung (180), die ein variables optisches Dämpfungsglied 185 enthält, gefolgt wird. Dieser Koppleranordnung 180 folgt ein Verstärker 130. Nach dem Verstärker 130 ist ein dispersionskompensierendes Faserstück 101 angebracht, das durch zwei Isolatoren 192, 193 und verschiedene Koppelelemente 181, 182 eingerahmt wird. Dann weist die Verstärkeranordnung wiederum einen Verstärker 140 auf, der von einem Bandpaßfilter 152 gefolgt wird. Nach dem Bandpaßfilter ist eine weitere Verstärkerstufe 160 vorgesehen, die durch das Koppelelement 183 abgeschlossen wird.

Die Funktion der erfindungsgemäßen Eingangsstufe wurde schon durch die Figur 4 beschrieben. Das gain-flattening-Filter 170 hat nun die Aufgabe das durch die beiden ersten Verstärkerstufen 110, 120 gewonnene Gewinnspektrum einzuebnen. Durch die beiden Tab-Koppler 180, werden jeweils 5 % der Spektrumshöhe aus dem Signalpfad ausgekoppelt um das Signalspektrum über einen Monitor sichtbar zu machen. Das variable optische Dämpfungsglied 185 dient dem Ausgleich der dynamischen Gewinnverkippung.

Nach erneuter Verstärkung 130 und Messung 181 folgt ein dispersionskompensierendes Faserstück 101. Als dispersionskompensierendes Faserstück 101 wird bevorzugt ein Add-DropMultiplexer eingesetzt, der die Dispersion kompensiert und durch den einzelne Kanäle in die Faser eingespeist und aus der Faser ausgekoppelt werden können. Der Einsatz des dispersionskompensierenden Faserstücks erfolgt ganz besonders bevorzugt an der eingesetzten Stelle des erfindungsgemäßen Verstärkers, da hier das optische Signal schon ausreichend verstärkt ist und nichtlineare Effekte, wie sie durch eine Vollverstärkung auftreten, noch nicht eingetreten sind.

Durch eine weitere Verstärkerstufe 140 und einen weiteren Bandpaßfilter 152 wird das Signalspektrum auf die gewünschte Bandbreite festgelegt, bevor es in einer letzten Verstärkerstufe 160 voll verstärkt wird, deren aktives Faserstück 161 von vorn und von hinten mit einem polarisationsgemultiplexten 1480-Laser kontradirektional gepumpt wird.

Mit dem erfindungsgemäßen rauscharmen bidirektionalen optischen Verstärker wird eine Anordnung zur Verfügung gestellt, die eine leistungsstarke, rauscharme Verstärkung bidirektionaler optischer Signale erlaubt.

Die vorliegende Erfindung betrifft einen rauscharmen bidirektionalen optischen Verstärker, der in einer bidirektionalen Übertragungsfaser so angeordnet ist, daß mittels zweier Zirkulatoren die bidirektionale Übertragungsfaser in zwei unidirektionale Zweige aufgeteilt wird. Die unidirektionalen Zweige sind mit mindestens zwei Verstärkern bestückt, zwischen denen bevorzugt mindestens ein optisches Filterelement und bevorzugt mindestens ein Isolator angeordnet ist. Außerdem wird die aktive Faser des ersten Verstärkers der unidirektionalen Zweige bevorzugt über einen WDM-Koppler gepumpt, der nach der aktiven Faser angeordnet ist.

## Patentansprüche

1. Bidirektionaler optischer Verstärker (1) für ein optisches Wellenlängen-Multiplex-Übertragungssystem (WDM) bestehend aus einem bidirektionalen Streckenabschnitt (30) und zwei Zirkulatoren (31, 32), die den bidirektionalen Streckenabschnitt (30) in zwei unidirektionale Zweige (10, 20) aufteilen,
**dadurch gekennzeichnet, daß**
die unidirektionalen Zweige (10, 20) einen ersten optischen Verstärker (11, 21) und einen zweiten optischen Verstärker (12, 22) und jeweils ein optisches Filter (15, 25) aufweisen und
das optische Filter (15, 25) zwischen dem ersten optischen Verstärker (11, 21) und dem zweiten optischen Verstärker (12, 22) angeordnet ist.

2. Bidirektionaler optischer Verstärker (1) nach Anspruch 1
**dadurch gekennzeichnet, daß**
in dem unidirektionalen Zweig (10, 20) mindestens ein Isolator (19) angeordnet ist.

3. Bidirektionaler optischer Verstärker (1) nach einem der vorhergehenden Ansprüche
**dadurch gekennzeichnet, daß**
der erste optische Verstärker (11, 21) für den unidirektionalen Zweig (10, 20) mindestens ein aktives Faserstück (111), mindestens eine Pumpquelle (112) und mindestens einen WDM-Koppler (113) umfaßt
und
der WDM-Koppler (113) hinter dem aktiven Faserstück (111) angeordnet ist.

4. Bidirektionaler optischer Verstärker (1) nach einem der vorhergehenden Ansprüche
**dadurch gekennzeichnet, daß**
das aktive Faserstück (111) ein Erbium-dotiertes Faserstück ist.

5. Bidirektionaler optischer Verstärker (1) nach dem vorhergehenden Anspruch
**dadurch gekennzeichnet, daß**
die Pumpquelle (112) mit mehr als einem WDM-Koppler (113, 114) verbunden ist.

6. Bidirektionaler optischer Verstärker (1) nach einem der vorhergehenden Ansprüche,
**dadurch gekennzeichnet, daß**
der erste optische Verstärker (11, 21) so ausgebildet ist, daß ein anliegendes Signal im linearen, ungesättigten Bereich verstärkbar ist.

7. Bidirektionaler optischer Verstärker (1) nach einem der vorhergehenden Ansprüche,
**dadurch gekennzeichnet, daß**
das Filter ein Bandpaßfilter und/oder ein Kammfilter und/oder ein gain-flattening-Filter ist.

8. Bidirektionaler optischer Verstärker (1) nach einem der vorhergehenden Ansprüche,
**dadurch gekennzeichnet, daß**
der unidirektionale Zweig (10, 20) mehrere optische Filter (15, 25) umfaßt.
